# FASCICULE DE BREVET EUROPEEN

(11) **EP 3 810 817 B1**
(45) Date de publication et mention de la délivrance du brevet: **13.08.2025**
(21) Numéro de dépôt: 19742879.0
(22) Date de dépôt: 24.06.2019
(51) Int. Cl.: C22C 21/00, B22F 3/105, C22F 1/04, B33Y 70/00, B22F 7/02, B22F 3/24, C22C 1/04, C22C 1/10, B22F 10/25, B22F 10/28, B22F 10/64, B22F 3/15, B22F 7/00, B22F 7/08, C22C 32/00

(54) **PROCEDE DE FABRICATION D'UNE PIECE EN ALLIAGE D'ALUMINIUM**
VERFAHREN ZUR HERSTELLUNG EINES ALUMINIUMLEGIERUNGSTEILS
PROCESS FOR MANUFACTURING AN ALUMINUM ALLOY PART

(30) Priorité: 25.06.2018 FR 1870745; 05.10.2018 FR 1871131
(43) Date de publication de la demande: 28.04.2021
(73) Titulaire: C-TEC CONSTELLIUM TECHNOLOGY CENTER, 38341 Voreppe (FR)
(72) Inventeur: CHEHAB, Bechir, 38500 VOIRON (FR); JARRY, Philippe, 38000 GRENOBLE (FR)
(74) Mandataire: Constellium - Propriété Industrielle
(86) Numéro de dépôt international: PCT/FR2019/051545
(87) Numéro de publication internationale: WO 2020/002813

(56) Documents cités:
- JP-A- 2007 039 748
- JP-A- 2008 261 004
- JP-A- H 116 024
- JP-A- H0 813 074
- JP-A- H01 149 935
- JP-A- H01 319 644
- JP-A- H03 232 949
- JP-A- H08 143 999
- US-A1- 2016 138 400
- US-A1- 2018 080 103
- A. L. GREER: "Grain refinement of alloys by inoculation of melts", ROYAL SOCIETY OF LONDON. PHILOSOPHICAL TRANSACTIONS A. MATHEMATICAL, PHYSICAL AND ENGINEERING SCIENCES, vol. 361, no. 1804, 28 January 2003 (2003-01-28), UK, pages 479 - 495, XP055571848, ISSN: 1471-2962, DOI: 10.1098/rsta.2002.1147
- J Q WANG ET AL: "Effect of rare-earth elements on the microstructural characterization in rapidly quenched thermally strengthened aluminium alloys", JOURNAL OF MATERIALS SCIENCE, vol. 33, no. 2, 31 January 1998 (1998-01-31), Dordrecht, pages 497 - 505, XP055568035, ISSN: 0022-2461, DOI: 10.1023/A:1004352704113

## Description

### DOMAINE TECHNIQUE

Le domaine technique de l'invention est un procédé de fabrication d'une pièce en alliage d'aluminium, mettant en œuvre une technique de fabrication additive.

### ART ANTERIEUR

Depuis les années 80, les techniques de fabrication additive se sont développées. Elles consistent à mettre en forme une pièce par ajout de matière, ce qui est à l'opposé des techniques d'usinage, qui visent à enlever de la matière. Autrefois cantonnée au prototypage, la fabrication additive est à présent opérationnelle pour fabriquer des produits industriels en série, y compris des pièces métalliques.

Le terme « fabrication additive » est défini, selon la norme française XP E67-001, comme un "ensemble des procédés permettant de fabriquer, couche par couche, par ajout de matière, un objet physique à partir d'un objet numérique". La norme ASTM F2792 (janvier 2012) définit également la fabrication additive. Différentes modalités de fabrication additive sont aussi définies et décrites dans la norme ISO/ASTM 17296-1. Le recours à une fabrication additive pour réaliser une pièce en aluminium, avec une faible porosité, a été décrit dans le document WO2015/006447. L'application de couches successives est généralement réalisée par application d'un matériau dit d'apport, puis fusion ou frittage du matériau d'apport à l'aide d'une source d'énergie de type faisceau laser, faisceau d'électrons, torche plasma ou arc électrique. Quelle que soit la modalité de fabrication additive appliquée, l'épaisseur de chaque couche ajoutée est de l'ordre de quelques dizaines ou centaines de microns.

Un moyen de fabrication additive est la fusion ou le frittage d'un matériau d'apport prenant la forme d'une poudre. Il peut s'agir de fusion ou de frittage par un faisceau d'énergie.

On connait notamment les techniques de frittage sélectif par laser (selective laser sintering, SLS ou direct metal laser sintering, DMLS), dans lequel une couche de poudre de métal ou d'alliage métallique est appliquée sur la pièce à fabriquer et est frittée sélectivement selon le modèle numérique avec de l'énergie thermique à partir d'un faisceau laser. Un autre type de procédé de formation de métal comprend la fusion sélective par laser (selective laser melting, SLM) ou la fusion par faisceau d'électrons (electron beam melting, EBM), dans lequel l'énergie thermique fournie par un laser ou un faisceau d'électrons dirigé est utilisée pour fondre sélectivement (au lieu de fritter) la poudre métallique afin qu'elle fusionne à mesure qu'elle refroidit et se solidifie.

On connait également le dépôt par fusion laser (laser melting deposition, LMD) dans lequel la poudre est projetée et fondue par un faisceau laser de façon simultanée.

La demande de brevet WO2016/209652 décrit un procédé pour fabriquer un aluminium à haute résistance mécanique comprenant : la préparation d'une poudre d'aluminium atomisée ayant une ou plusieurs tailles de poudre approximative désirée et une morphologie approximative ; le frittage de la poudre pour former un produit par fabrication additive ; la mise en solution ; la trempe ; et le revenu de l'aluminium fabriqué de façon additive.

La demande de brevet US2017/0016096 décrit un procédé de fabrication d'une pièce par fusion localisée notamment obtenue par l'exposition d'une poudre à un faisceau d'énergie de type faisceau d'électrons ou faisceau laser, la poudre étant constituée d'un alliage d'aluminium dont la teneur en cuivre est comprise entre 5 % et 6 % en masse, la teneur en magnésium étant comprise entre 2.5 % et 3.5 % en masse.

La demande de brevet EP2796229 divulgue un procédé de formation d'un alliage métallique d'aluminium renforcé par dispersion comprenant les étapes consistant à : obtenir, sous une forme de poudre, une composition d'alliage d'aluminium qui est susceptible d'acquérir une microstructure renforcée par dispersion ; diriger un faisceau laser à basse densité d'énergie sur une partie de la poudre ayant la composition de l'alliage ; retirer le faisceau laser de la partie de la composition d'alliage en poudre ; et refroidir la partie de la composition d'alliage en poudre à une vitesse supérieure ou égale à environ 10⁶ °C par seconde, pour former ainsi l'alliage métallique d'aluminium renforcé par dispersion. La méthode est particulièrement adaptée pour un alliage ayant une composition selon la formule suivante : Al_{comp}FeₐSi_{b}X_{c}, dans laquelle X représente au moins un élément choisi dans le groupe constitué par Mn, V, Cr, Mo, W, Nb et Ta ; « a » va de 2,0 à 7,5 % en atomes ; « b » va de 0,5 à 3,0 % en atomes ; « c » va de 0,05 à 3,5 % en atomes ; et le complément est de l'aluminium et des impuretés accidentelles, à condition que le rapport [Fe+Si]/Si se situe dans la gamme d'environ 2,0:1 à 5,0:1.

La demande de brevet US2017/0211168 divulgue un procédé de fabrication d'un alliage léger et résistant, performant à haute température, comprenant de l'aluminium, du silicium, et du fer et/ou du nickel.

La demande de brevet EP3026135 décrit un alliage de moulage comprenant 87 à 99 parts en poids d'aluminium et de silicium, 0,25 à 0,4 parts en poids de cuivre et 0,15 à 0,35 parts en poids d'une combinaison d'au moins deux éléments parmi Mg, Ni et Ti. Cet alliage de moulage est adapté pour être pulvérisé par un gaz inerte pour former une poudre, la poudre étant utilisée pour former un objet par fabrication additive par laser, l'objet subissant ensuite un traitement de revenu.

La demande de brevet US2016/0138400 décrit des alliages comprenant de 3 à 12 % en poids de fer, de 0,1 à 3 % en poids de vanadium, de 0,1 à 3 % en poids de silicium et de 1 à 6 % en poids de cuivre, reste aluminium et impuretés, adapté pour les techniques de fabrication additive.

La demande de brevet JPH08143999 divulgue une poudre d'alliage comprenant 3-7% Fe, 3-12% Ni, 1-7% Si, 0.5-3% Cr, avec le reste Al et impuretés.

La publication « Characterization of Al-Fe-V-Si heat-resistant aluminum alloy components fabricated by selective laser melting », Journal of Material Research, Vol. 30, No. 10, May 28, 2015, décrit la fabrication par SLM de composants résistants à la chaleur de composition, en % en poids, Al-8.5Fe-1.3V-1.7Si.

La publication « Microstructure and mechanical properties of Al-Fe-V-Si aluminum alloy produced by electron beam melting », Materials Science&Engineering A659(2016)207-214, décrit des pièces du même alliage que dans l'article précédent obtenues par EBM.

Il existe une demande grandissante d'alliages d'aluminium à haute résistance pour l'application SLM. Les alliages 4xxx (principalement Al10SiMg, Al7SiMg et Al12Si) sont les alliages d'aluminium les plus matures pour l'application SLM. Ces alliages offrent une très bonne aptitude au procédé SLM mais souffrent de propriétés mécaniques limitées.

Le Scalmalloy^{®} (DE102007018123A1) développé par APWorks offre (avec un traitement thermique post-fabrication de 4h à 325°C) de bonnes propriétés mécaniques à température ambiante. Cependant cette solution souffre d'un coût élevé sous forme de poudre lié à sa teneur élevée en scandium (~ 0,7% Sc) et à la nécessité d'un processus d'atomisation spécifique. Cette solution souffre également de mauvaises propriétés mécaniques à haute température, par exemple supérieure à 150°C.

Les propriétés mécaniques des pièces d'aluminium obtenues par fabrication additive dépendent de l'alliage formant le métal d'apport, et plus précisément de sa composition, des paramètres du procédé de fabrication additive ainsi que des traitements thermiques appliqués. Les inventeurs ont déterminé une composition d'alliage qui, utilisée dans un procédé de fabrication additive, permet d'obtenir des pièces ayant des caractéristiques remarquables. En particulier, les pièces obtenues selon la présente invention ont des caractéristiques améliorées par rapport à l'art antérieur (notamment un alliage 8009), en particulier en termes de qualité de surface, de résistance à la fissuration à chaud, ou encore de dureté à chaud (par exemple après 4h à 400°C).

### EXPOSE DE L'INVENTION

Un premier objet de l'invention est un procédé de fabrication d'une pièce selon la revendication 1.

Optionnellement, l'alliage peut également comprendre au moins un élément choisi parmi : Mn, Ti, W, Nb, Ta, Y, Yb, Nd, Er, Cr, Zr, Hf, Sc, Ce et/ou du mischmétal, selon une fraction massique inférieure ou égale à 5 %, de préférence inférieure ou égale à 3 % chacun, et inférieure ou égale à 15 %, de préférence inférieure ou égale à 12 %, encore plus préférentiellement inférieure ou égale à 5 % au total. Cependant, dans un mode de réalisation, on évite l'addition de Sc, la fraction massique préférée de Sc étant alors inférieure à 0,05 %, et de préférence inférieure à 0,01 %. Ces éléments peuvent conduire à la formation de dispersoïdes ou de phases intermétalliques fines permettant d'augmenter la dureté du matériau obtenu.

Optionnellement, l'alliage peut également comprendre au moins un élément choisi parmi : Sr, Ba, Sb, Bi, Ca, P, B, In et/ou Sn, selon une fraction massique inférieure ou égale à 1 %, de préférence inférieure ou égale à 0,1 %, encore plus préférentiellement inférieure ou égale à 700 ppm chacun, et inférieure ou égale à 2 %, de préférence inférieure ou égale à 1 % au total. Cependant, dans un mode de réalisation, on évite l'addition de Bi, la fraction massique préférée de Bi étant alors inférieure à 0,05 %, et de préférence inférieure à 0,01 %.

Optionnellement, l'alliage peut également comprendre au moins un élément choisi parmi : Ag selon une fraction massique de 0,06 à 1 %, Li selon une fraction massique de 0,06 à 1 %, Cu selon une fraction massique de 0,06 à 5 %, de préférence de 0,1 à 2 %, Zn selon une fraction massique de 0,06 à 1 % et/ou Mg selon une fraction massique de 0,06 à 1 %. Ces éléments peuvent agir sur la résistance du matériau par précipitation durcissante ou par leur effet sur les propriétés de la solution solide.

Cependant, l'addition de Mg n'est pas recommandée et la teneur en Mg est de préférence maintenue inférieure à une valeur d'impureté de 0,05 % massique.

Optionnellement, l'alliage peut également comprendre au moins un composé pour affiner les grains et éviter une microstructure colonnaire grossière, par exemple AlTiC ou AlTiB2 (par exemple sous forme AT5B ou AT3B), selon une quantité inférieure ou égale à 50 kg/tonne, de préférence inférieure ou égale à 20 kg/tonne, encore plus préférentiellement inférieure ou égale à 12 kg/tonne chacun, et inférieure ou égale à 50 kg/tonne, de préférence inférieure ou égale à 20 kg/tonne au total.

Selon un mode de réalisation, le procédé peut comporter, suite à la formation des couches :
- une mise en solution suivie d'une trempe et d'un revenu, ou
- un traitement thermique typiquement à une température d'au moins 100°C et d'au plus 400°C,
- et/ou une compression isostatique à chaud (CIC).

Le traitement thermique peut notamment permettre un dimensionnement des contraintes résiduelles et/ou une précipitation supplémentaire de phases durcissantes.

Le traitement CIC peut notamment permettre d'améliorer les propriétés d'allongement et les propriétés en fatigue. La compression isostatique à chaud peut être réalisée avant, après ou à la place du traitement thermique.

Avantageusement, la compression isostatique à chaud est réalisée à une température de 250°C à 550°C et de préférence de 300°C à 450°C, à une pression de 500 à 3000 bars et pendant une durée de 0,5 à 10 heures.

Le traitement thermique et/ou la compression isostatique à chaud permet en particulier d'augmenter la dureté du produit obtenu.

Selon un autre mode de réalisation, adapté aux alliages à durcissement structural, on peut réaliser une mise en solution suivie d'une trempe et d'un revenu de la pièce formée et/ou une compression isostatique à chaud. La compression isostatique à chaud peut dans ce cas avantageusement se substituer à la mise en solution. Cependant le procédé selon l'invention est avantageux car il ne nécessite de préférence pas de traitement de mise en solution suivi de trempe. La mise en solution peut avoir un effet néfaste sur la résistance mécanique dans certains cas en participant à un grossissement des dispersoïdes ou des phases intermétalliques fines.

Selon un mode de réalisation, le procédé selon la présente invention comporte en outre optionnellement un traitement d'usinage, et/ou un traitement de surface chimique, électrochimique ou mécanique, et/ou une tribofinition. Ces traitements peuvent être réalisés notamment pour réduire la rugosité et/ou améliorer la résistance à la corrosion et/ou améliorer la résistance à l'initiation de fissures en fatigue.

Optionnellement, il est possible de réaliser une déformation mécanique de la pièce, par exemple après la fabrication additive et/ou avant le traitement thermique.

D'autres avantages et caractéristiques ressortiront plus clairement de la description qui va suivre et des exemples non limitatifs, et représentés sur les figures listées ci-dessous.

### FIGURES

[Fig. 1] La Figure 1 est un schéma illustrant un procédé de fabrication additive de type SLM, ou EBM.
[Fig. 2] La Figure 2 montre une micrographie d'une coupe transversale d'un échantillon Al10Si0.3Mg après balayage de surface avec un laser, coupé et poli avec deux empreintes Knoop dans la couche refondue.

### DESCRIPTION DETAILLEE DE L'INVENTION

Dans la description, sauf indication contraire :
- la désignation des alliages d'aluminium est conforme à la nomenclature établie par The Aluminum Association ;
- les teneurs en éléments chimiques sont désignées en % et représentent des fractions massiques.

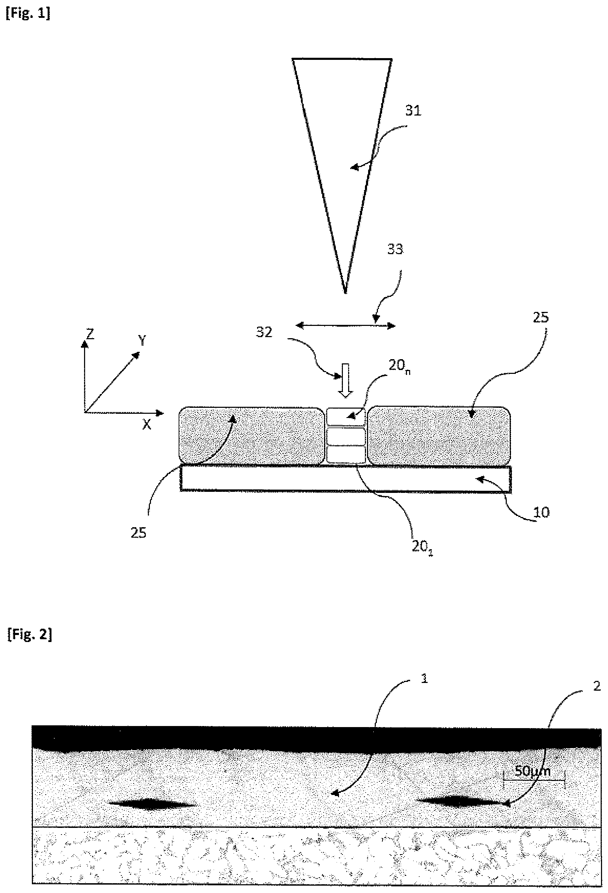

La Figure 1 décrit de façon générale un mode de réalisation, dans lequel le procédé de fabrication additive selon l'invention est mis en œuvre. Selon ce procédé, le matériau d'apport 25 se présente sous la forme d'une poudre en alliage selon l'invention. Une source d'énergie, par exemple une source laser ou une source d'électrons 31, émet un faisceau d'énergie par exemple un faisceau laser ou un faisceau d'électrons 32. La source d'énergie est couplée au matériau d'apport par un système optique ou de lentilles électromagnétiques 33, le mouvement du faisceau pouvant ainsi être déterminé en fonction d'un modèle numérique M. Le faisceau d'énergie 32 suit un mouvement selon le plan longitudinal XY, décrivant un motif dépendant du modèle numérique M. La poudre 25 est déposée sur un support 10. L'interaction du faisceau d'énergie 32 avec la poudre 25 engendre une fusion sélective de cette dernière, suivie d'une solidification, résultant en la formation d'une couche 20₁...20ₙ. Lorsqu'une couche a été formée, elle est recouverte de poudre 25 du métal d'apport et une autre couche est formée, superposée à la couche préalablement réalisée. L'épaisseur de la poudre formant une couche peut par exemple être de 10 à 100 µm. Ce mode de fabrication additive est typiquement connu sous le nom de fusion sélective par laser (selective laser melting, SLM) quand le faisceau d'énergie est un faisceau laser, le procédé étant dans ce cas avantageusement exécuté à pression atmosphérique, et sous le nom de fusion par faisceau d'électrons (electron beam melting EBM) quand le faisceau d'énergie est un faisceau d'électrons, le procédé étant dans ce cas avantageusement exécuté à pression réduite, typiquement inférieure à 0,01 bar et de préférence inférieure à 0,1 mbar.

Dans un autre mode de réalisation, la couche est obtenue par frittage sélectif par laser (selective laser sintering, SLS ou direct metal laser sintering, DMLS), la couche de poudre d'alliage selon l'invention étant frittée sélectivement selon le modèle numérique choisi avec de l'énergie thermique fournie par un faisceau laser.

Dans encore un autre mode de réalisation non décrit par la figure 1, la poudre est projetée et fondue de façon simultanée par un faisceau généralement laser. Ce procédé est connu sous le nom de dépôt par fusion laser (laser melting deposition).

D'autres procédés peuvent être utilisés, notamment ceux connus sous les noms de dépôt direct d'énergie (Direct Energy Deposition, DED), dépôt direct de métal (Direct Metal Deposition, DMD), dépôt direct par laser (Direct Laser Deposition, DLD), technologie de dépôt par laser (Laser Deposition Technology, LDT), dépôt de métal par laser (Laser Metal Deposition, LMD), ingénierie de formes nettes par laser (Laser Engineering Net Shaping, LENS), technologie de plaquage par laser (Laser Cladding Technology, LCT), ou technologie de fabrication de formes libres par laser (Laser Freeform Manufacturing Technology, LFMT).

Dans un mode de réalisation, le procédé selon l'invention est utilisé pour la réalisation d'une pièce hybride comprenant une partie 10 obtenue par des procédés classiques de laminage et/ou de filage et/ou de moulage et/ou de forgeage optionnellement suivi d'usinage et une partie solidaire 20 obtenue par fabrication additive. Ce mode de réalisation peut également convenir pour la réparation de pièces obtenues par les procédés classiques.

On peut également, dans un mode de réalisation de l'invention, utiliser le procédé selon l'invention pour la réparation de pièces obtenues par fabrication additive.

A l'issue de la formation des couches successives on obtient une pièce brute ou pièce à l'état brut de fabrication.

Les pièces métalliques obtenues par le procédé selon l'invention sont particulièrement avantageuses car elles présentent des surfaces lisses et ne présentent pas de fissuration à chaud. D'autre part, elles ont une dureté à l'état brut de fabrication inférieure à celle d'une référence en 8009, et en même temps une dureté après un traitement thermique supérieure à celle d'une référence en 8009. Ainsi, contrairement aux alliages selon l'art antérieur tels que l'alliage 8009, la dureté des alliages selon la présente invention diminue moins entre l'état brut de fabrication et l'état après un traitement thermique. La dureté plus faible à l'état brut de fabrication des alliages selon la présente invention par rapport à un alliage 8009 est considérée comme avantageuse pour l'aptitude au procédé SLM, en induisant un niveau de contraintes plus faible lors de la fabrication SLM et ainsi une plus faible sensibilité à la fissuration à chaud. La dureté plus élevée après un traitement thermique (par exemple 1h à 400°C) des alliages selon la présente invention par rapport à un alliage 8009 apporte une meilleure stabilité thermique. Le traitement thermique pourrait être une étape de compressions isostatique à chaud (CIC) post-fabrication SLM. Ainsi, les alliages selon la présente invention sont plus mous à l'état brut de fabrication mais ont une meilleure dureté après traitement thermique, d'où de meilleures propriétés mécaniques pour les pièces en service.

La dureté Knoop 10g à l'état brut de fabrication des pièces métalliques obtenues selon la présente invention est de préférence de 150 à 350 HK, plus préférentiellement de 200 à 340 HK. De manière préférée, la dureté Knoop 10g des pièces métalliques obtenues selon la présente invention, après un traitement thermique d'au moins 100°C et d'au plus 550 °C et/ou une compression isostatique à chaud, est de 150 à 300 HK, plus préférentiellement de 160 à 250 HK. Le procédé de mesure de la dureté Knoop est décrit dans les exemples ci-après.

La poudre selon la présente invention peut présenter au moins l'une des caractéristiques suivantes :
- taille moyenne de particules de 10 à 100 µm, de préférence de 20 à 60 µm ;
- forme sphérique. La sphéricité d'une poudre peut par exemple être déterminée en utilisant un morphogranulomètre ;
- bonne coulabilité. La coulabilité d'une poudre peut par exemple être déterminée selon la norme ASTM B213 ;
- faible porosité, de préférence de 0 à 5 %, plus préférentiellement de 0 à 2 %, encore plus préférentiellement de 0 à 1 % en volume. La porosité peut notamment être déterminée par microscopie à balayage électronique ou par pycnométrie à l'hélium (voir la norme ASTM B923) ;
- absence ou faible quantité (moins de 10 %, de préférence moins de 5 % en volume) de petites particules (1 à 20 % de la taille moyenne de la poudre), dites satellites, qui collent aux particules plus grosses.

La poudre selon la présente invention peut être obtenue par des procédés classiques d'atomisation à partir d'un alliage selon l'invention sous forme liquide ou solide ou, alternativement, la poudre peut être obtenue par mélange de poudres primaires avant l'exposition au faisceau énergétique, les différentes compositions des poudres primaires ayant une composition moyenne correspondant à la composition de l'alliage selon l'invention.

On peut également ajouter des particules infusibles, non solubles, par exemple des oxydes ou des particules TiB₂ ou des particules de carbone, dans le bain avant l'atomisation de la poudre et/ou lors du dépôt de la poudre et/ou lors du mélange des poudres primaires. Ces particules peuvent servir à affiner la microstructure. Elles peuvent également servir à durcir l'alliage si elles sont de taille nanométrique. Ces particules peuvent être présentes selon une fraction volumique inférieure à 30 %, de préférence inférieure à 20 %, plus préférentiellement inférieure à 10 %.

La poudre selon la présente invention peut être obtenue par exemple par atomisation par jet de gaz, atomisation plasma, atomisation par jet d'eau, atomisation par ultrasons, atomisation par centrifugation, électrolyse et sphéroïdisation, ou broyage et sphéroïdisation.

De préférence, la poudre selon la présente invention est obtenue par atomisation par jet de gaz. Le procédé d'atomisation par jet de gaz commence avec la coulée d'un métal fondu à travers une buse. Le métal fondu est ensuite atteint par des jets de gaz neutres, tels que de l'azote ou de l'argon, et atomisé en très petites gouttelettes qui se refroidissent et se solidifient en tombant à l'intérieur d'une tour d'atomisation. Les poudres sont ensuite recueillies dans une canette. Le procédé d'atomisation par jet de gaz présente l'avantage de produire une poudre ayant une forme sphérique, contrairement à l'atomisation par jet d'eau qui produit une poudre ayant une forme irrégulière. Un autre avantage de l'atomisation par jet de gaz est une bonne densité de poudre, notamment grâce à la forme sphérique et à la distribution de taille de particules. Encore un autre avantage de ce procédé est une bonne reproductibilité de la distribution de taille de particules.

Après sa fabrication, la poudre selon la présente invention peut être étuvée, notamment afin de réduire son humidité. La poudre peut également être conditionnée et stockée entre sa fabrication et son utilisation.

La poudre selon la présente invention peut notamment être utilisée dans les applications suivantes :
- frittage sélectif par laser (Selective Laser Sintering ou SLS en anglais) ;
- frittage direct du métal par laser (Direct Metal Laser Sintering ou DMLS en anglais) ;
- frittage sélectif par chauffage (Selective Heat Sintering ou SHS en anglais) ;
- fusion sélective par laser (Selective Laser Melting ou SLM en anglais) ;
- fusion par faisceau d'électrons (Electron Beam Melting ou EBM en anglais) ;
- dépôt par fusion laser (Laser Melting Deposition en anglais) ;
- dépôt direct par apport d'énergie (Direct Energy Deposition ou DED en anglais) ;
- dépôt direct de métal (Direct Metal Deposition ou DMD en anglais) ;
- dépôt direct par laser (Direct Laser Deposition ou DLD en anglais) ;
- technologie de dépôt par Laser (Laser Deposition Technology ou LDT en anglais) ;
- ingénierie de formes nettes par laser (Laser Engineering Net Shaping ou LENS en anglais) ;
- technologie de plaquage par laser (Laser Cladding Technology ou LCT en anglais) ;
- technologie de fabrication de formes libres par laser (Laser Freeform Manufacturing Technology ou LFMT en anglais) ;
- dépôt par fusion laser (Laser Metal Deposition ou LMD en anglais) ;
- pulvérisation à froid (Cold Spray Consolidation ou CSC en anglais) ;
- fabrication additive par friction (Additive Friction Stir ou AFS en anglais) ;
- frittage par étincelle au plasma ou frittage flash (Field Assisted Sintering Technology, FAST ou spark plasma sintering en anglais) ; ou
- soudage par friction rotative (Inertia Rotary Friction Welding ou IRFW.

L'invention sera décrite plus en détails dans l'exemple ci-après.

L'invention n'est pas limitée aux modes de réalisation décrits dans la description ci-avant ou dans les exemples ci-après, et peut varier largement dans le cadre de l'invention telle que définie par les revendications jointes à la présente description.

### EXEMPLES

Différents alliages selon la présente invention, appelés Innov1, Innov2 et Innov3, et un alliage 8009 de l'art antérieur ont été coulés dans un moule en cuivre en utilisant une machine Induthem VC 650V pour obtenir des lingots de 130 mm de hauteur, de 95 mm de largeur et de 5 mm d'épaisseur. La composition des alliages, obtenue par ICP, est donnée en pourcentage de fraction massique dans le tableau 1 suivant.

**[Tableau 1]**

| **Alliages** | **Si** | **Fe** | **V** | **Ni** | **Co** | **La** | **Ba** | **Sb** | **Sn** |
|---|---|---|---|---|---|---|---|---|---|
| Référence (8009) | 1,8 | 8,65 | 1,3 | - | - | - | - | - | - |
| Innov1 | 1,95 | 3,92 | 1,22 | 5,16 | - | - | - | - | - |
| Innov2 | 1,91 | 3,88 | 1,14 | - | 4,83 | - | - | - | - |
| Innov3 | 1,82 | 6,45 | 1,1 | - | - | 4,78 | 0,025 | 0,054 | 0,050 |

Le composé affinant AT5B a été ajouté aux alliages Innov1 et Innov2, selon une quantité de 10 kg/tonne.

### Exemple 1 : SLM sur disques

Les alliages tels que décrits dans le tableau 1 ci-avant ont été testés par une méthode de prototypage rapide. Des échantillons ont été usinés pour le balayage de la surface avec un laser, sous forme de disques d'épaisseur 5 mm et de diamètre 27 mm, à partir des lingots obtenus ci-avant. Les disques ont été placés dans une machine SLM et des balayages de la surface ont été effectués avec un laser en suivant la même stratégie de balayage et des conditions de procédé représentatives de celles utilisées pour le procédé SLM. Il a en effet été constaté qu'il était possible de cette manière d'évaluer l'aptitude des alliages au procédé SLM et notamment la qualité de surface, la sensibilité à la fissuration à chaud, la dureté à l'état brut et la dureté après traitement thermique.

Sous le faisceau laser, le métal fond dans un bain de 10 à 350 µm d'épaisseur. Après le passage du laser, le métal refroidit rapidement comme dans le procédé SLM. Après le balayage laser, une fine couche en surface de 10 à 350 µm d'épaisseur a été fondue puis solidifiée. Les propriétés du métal dans cette couche sont proches des propriétés du métal au cœur d'une pièce fabriquée par SLM, car les paramètres de balayage sont judicieusement choisis. Le balayage laser de la surface des différents échantillons a été effectué à l'aide d'une machine de fusion laser sélective PM100 de marque Phénix systems. La source laser avait une puissance de 200 W, la température de fabrication était de 200°C, l'écart vecteur était de 50 µm et le diamètre du faisceau était de 60 à 80 µm. Deux vitesses de balayage différentes ont été testées pour chaque échantillon : 600 mm/s et 900 mm/s.

### 1) Sensibilité à la fissuration à chaud

Il est connu que certains alliages ne peuvent pas être utilisés en SLM car les échantillons fissurent pendant la construction en SLM. Il a été montré que cette fissuration peut également être obtenue par le balayage de la surface avec un laser. Ainsi cette méthode (balayage de la surface avec un laser) permet de simuler un procédé SLM et d'éliminer des alliages qui fissureraient lors du procédé SLM.

Les disques obtenus ci-avant ont été coupés dans le plan perpendiculaire à la direction des passes du laser et ont ensuite été polis. La sensibilité aux fissures à chaud (pendant le balayage de surface avec le laser) a été évaluée par des observations métallographiques (x200) sur des coupes transversales des zones traitées. Les résultats sont résumés dans le tableau 2 ci-après. La cotation 1 correspond à l'absence de microfissures, la cotation 2 à la présence de microfissures de moins de 50 µm, et la cotation 3 à la présence de microfissures de plus de 50 µm.

**[Tableau 2]**

| **Alliage** | **Cotation** |
|---|---|
| Référence (8009) | 3 |
| Innov1 | 1 |
| Innov2 | 2 |
| Innov3 | 1 |

Ainsi, d'après le tableau2 ci-avant, seuls les alliages selon la présente invention permettent d'obtenir une bonne résistance à la fissuration à chaud. D'autre part, il a été observé une surface lisse avec peu ou pas de défauts.

### 2) Mesure de dureté Knoop

La dureté est une propriété importante pour les alliages. En effet, si la dureté dans la couche refondue par balayage de la surface avec un laser est élevée, une pièce fabriquée avec le même alliage aura potentiellement une limite de rupture élevée.

Pour évaluer la dureté de la couche refondue, les disques obtenus ci-avant ont été coupés dans le plan perpendiculaire à la direction des passes du laser et ont ensuite été polis. Après polissage, des mesures de dureté ont été effectuées dans la couche refondue. La mesure de dureté a été effectuée avec un appareil de modèle Durascan de Struers. La méthode de dureté Knoop 10 g avec la grande diagonale de l'empreinte placée parallèlement au plan de la couche refondue a été choisie pour garder suffisamment de distance entre l'empreinte et le bord de l'échantillon. 15 empreintes ont été positionnées à mi-épaisseur de la couche refondue. La Figure 2 montre un exemple de la mesure de dureté. La référence 1 correspond à la couche refondue et la référence 2 correspond à une empreinte de dureté Knoop.

La dureté a été mesurée selon l'échelle Knoop avec une charge de 10 g après traitement laser (à l'état brut) et après un traitement thermique supplémentaire à 400°C pendant 4 h, permettant notamment d'évaluer l'aptitude de l'alliage au durcissement lors d'un traitement thermique et l'effet d'un éventuel traitement CIC sur les propriétés mécaniques.

Les valeurs de dureté Knoop 10g à l'état brut et après 4h à 400°C sont données dans le tableau 3 ci-après (HK).

**[Tableau 3]**

| **Alliage** | **Dureté Knoop 10g à l'état brut** | **Dureté Knoop 10g après 4h à 400°C** |
|---|---|---|
| Référence (8009) | 359 | 155 |
| Innov1 | 261 | 179 |
| Innov2 | 272 | 193 |
| Innov3 | 331 | 188 |

Les alliages selon la présente invention (Innov1, Innov2 et Innov3) ont montré une dureté Knoop 10g à l'état brut inférieure à celle de l'alliage 8009, mais, après 4h à 400°C, supérieure à celle de l'alliage 8009 de référence. Sans être lié par la théorie, il est supposé que la dureté plus élevée après 4h à 400°C est très probablement associée à une cinétique de coagulation plus lente des dispersoïdes (meilleure stabilité thermique).

### Exemple 2 : SLM sur poudre

Des lingots coulés à partir des compositions décrites dans le tableau 1 ci-avant ont été atomisés par l'UTBM (Université de Technologie de Belfort Montbéliard) pour obtenir une poudre par atomisation par jet de gaz (méthode décrite ci-avant). L'analyse granulométrique des poudres obtenues a été effectuée par diffraction laser à l'aide d'un granulomètre Malvern Mastersizer 2000 selon la norme ISO 13320. La courbe décrivant l'évolution de la fraction volumique en fonction du diamètre des particules formant la poudre décrit généralement une distribution assimilable à une distribution gaussienne. On appelle généralement D₁₀, D₅₀ et D₉₀ respectivement les fractiles à 10 %, à 50 % (médiane) et à 90 % de la distribution obtenue.

Les caractéristiques D₁₀, D₅₀ et D₉₀ des poudres obtenues est donnée dans le tableau 4 ci-après.

**[Tableau 4]**

| **Alliage** | **D₁₀ (µm)** | **D₅₀ (µm)** | **D₉₀ (µm)** |
|---|---|---|---|
| Référence (8009) | 33,5 | 52,3 | 81,2 |
| Innov1 | 42,3 | 58,1 | 81,2 |
| Innov2 | 39,5 | 60,7 | 93,6 |
| Innov3 | 58,6 | 88,3 | 132 |

Ainsi, il est possible de fabriquer des poudres à partir des alliages selon l'invention.

Dans cet exemple des pièces ont été élaborées par le procédé SLM précédemment décrit. Les essais ont été menés sur une machine Renishaw AM 400 de 400W par l'UTBM. Pour chacun des alliages Innov1, Innov2 et Innov3, plusieurs cubes de 7 mm de côté ont été fabriqués en faisant varier les paramètres de procédé (voir le tableau 5 ci-après). La porosité des cubes ainsi obtenus a été déterminée (par polissage puis analyse d'image) et est donnée dans le tableau 5 ci-après.

**[Tableau 5]**

| **Alliage** | **Energie (J/mm³)** | **Vitesse (mm/s)** | **Vitesse volumique (mm³/s)** | **Porosité** |
|---|---|---|---|---|
| | 96 | 891 | 3,2 | 2,3 |
| | 127 | 714 | 2,4 | 0,2 |
| | 102 | 833 | 2,8 | 0,2 |
| | 97 | 776 | 2,6 | 0,9 |
| | 129 | 776 | 2,6 | 0,1 |
| | 114 | 825 | 2,5 | 0,7 |
| Innov1 | 95 | 825 | 3,0 | 1,4 |
| | 118 | 825 | 2,7 | 0,6 |
| | 95 | 952 | 3,1 | 0,8 |
| | 124 | 776 | 2,3 | 0,1 |
| | 104 | 776 | 2,8 | 0,2 |
| | 92 | 891 | 2,9 | 1,8 |
| | 116 | 891 | 2,23 | 3,0 |
| | 96 | 891 | 2,67 | 3,2 |
| | 127 | 714 | 1,96 | 0,8 |
| | 102 | 833 | 2,29 | 1,2 |
| | 129 | 776 | 2,13 | 2,0 |
| Innov2 | 114 | 825 | 2,06 | 3,2 |
| | 95 | 825 | 2,47 | 3,3 |
| | 89 | 825 | 2,27 | 3,2 |
| | 118 | 825 | 2,27 | 1,1 |
| | 124 | 776 | 1,94 | 0,8 |
| | 104 | 776 | 2,33 | 0,9 |
| | 92 | 891 | 2,45 | 1,8 |
| | 87 | 891 | 2,23 | 2,7 |
| | 116 | 891 | 2,23 | 3,0 |
| | 127 | 714 | 1,96 | 1,0 |
| | 102 | 833 | 2,29 | 1,2 |
| Innov3 | 129 | 776 | 2,13 | 0,7 |
| | 95 | 825 | 2,47 | 3,5 |
| | 118 | 825 | 2,27 | 0,8 |
| | 124 | 776 | 1,94 | 1,2 |
| | 104 | 776 | 2,33 | 2,5 |

Ainsi, il est possible d'obtenir des pièces ayant des porosités acceptables avec le procédé selon la présente invention. La porosité pourrait être améliorée par optimisation du procédé, voire avec un traitement post-fabrication de type CIC (compression isostatique à chaud).

En outre, aucun des échantillons testés n'a présenté de fissuration pendant la fabrication SLM.

## Revendications

1. Procédé de fabrication d'une pièce comportant une formation de couches métalliques solides successives (20₁...20ₙ), superposées les unes aux autres, chaque couche décrivant un motif défini à partir d'un modèle numérique (*M*), chaque couche étant formée par le dépôt d'un métal (25), dit métal d'apport, le métal d'apport étant soumis à un apport d'énergie de façon à entrer en fusion et à constituer, en se solidifiant, ladite couche, dans lequel le métal d'apport prend la forme d'une poudre (25), dont l'exposition à un faisceau énergétique (32) résulte en une fusion suivie d'une solidification de façon à former une couche solide (20₁...20ₙ),
le procédé étant **caractérisé en ce que** le métal d'apport (25) est un alliage d'aluminium comprenant au moins les éléments d'alliage suivant :
- Si, selon une fraction massique de 0 à 4 %, de préférence de 0,5 à 4 %, plus préférentiellement de 1 à 4 %, et encore plus préférentiellement de 1 à 3 % ;
- Fe, selon une fraction massique de 1 % à 15 %, de préférence de 2 à 10 % ;
- V, selon une fraction massique de 0 à 5 %, de préférence de 0,5 à 5 %, plus préférentiellement de 1 à 5 %, et encore plus préférentiellement de 1 à 3 % ;
- au moins un élément choisi parmi : Ni, La et/ou Co, selon une fraction massique de 3 à 8 % chacun, et selon une fraction massique inférieure ou égale à 15 %, de préférence inférieure ou égale à 12 % au total ;
- optionnellement au moins un élément choisi parmi : Mn, Ti, W, Nb, Ta, Y, Yb, Nd, Er, Cr, Zr, Hf, Ce, Sc et/ou du mischmétal, selon une fraction massique inférieure ou égale à 5 % chacun et inférieure ou égale à 15 % au total ;
- optionnellement au moins un élément choisi parmi : Sr, Ba, Sb, Bi, Ca, P, B, In et/ou Sn, selon une fraction massique inférieure ou égale à 1 % chacun et inférieure ou égale à 2 % au total ;
- optionnellement au moins un élément choisi parmi : Ag selon une fraction massique de 0,06 à 1 %, Li selon une fraction massique de 0,06 à 1 %, Cu selon une fraction massique de 0,06 à 5 %, Zn selon une fraction massique de 0,06 à 1 % et/ou Mg selon une fraction massique de 0,06 à 1 % ;
- optionnellement des impuretés selon une fraction massique inférieure à 500 ppm chacune et inférieure à 0,15 % au total ;
- le reste étant de l'aluminium.

2. Procédé selon la revendication 1, dans lequel la fraction massique d'au moins un élément choisi parmi : Mn, Ti, W, Nb, Ta, Y, Yb, Nd, Er, Cr, Zr, Hf, Ce, Sc et/ou du mischmétal, est inférieure ou égale à 3 % chacun, et de préférence inférieure ou égale à 12 %, encore plus préférentiellement inférieure ou égale à 5 % au total.

3. Procédé selon l'une quelconque des revendications précédentes, dans lequel la fraction massique d'au moins un élément choisi parmi : Sr, Ba, Sb, Bi, Ca, P, B, In et/ou Sn, est inférieure ou égale à 0,1 %, préférentiellement inférieure ou égale à 700 ppm chacun, et de préférence inférieure ou égale à 1 % au total.

4. Procédé selon l'une quelconque des revendications précédentes, dans lequel la fraction massique de Cu est de 0,1 à 2 %.

5. Procédé selon l'une quelconque des revendications précédentes, dans lequel l'alliage d'aluminium comprend également au moins un composé pour affiner les grains, par exemple AlTiC ou AlTiB2, selon une quantité inférieure ou égale à 50 kg/tonne, de préférence inférieure ou égale à 20 kg/tonne, encore plus préférentiellement inférieure ou égale à 12 kg/tonne chacun, et inférieure ou égale à 50 kg/tonne, de préférence inférieure ou égale à 20 kg/tonne au total.

6. Procédé selon l'une quelconque des revendications précédentes, comportant, suite à la formation des couches (20₁...20ₙ) :
- une mise en solution suivie d'une trempe et d'un revenu, ou
- un traitement thermique typiquement à une température d'au moins 100°C et d'au plus 400°C,
- et/ou une compression isostatique à chaud.

## Patentansprüche

1. Verfahren zum Herstellen eines Teils, umfassend eine Bildung von aufeinanderfolgenden festen Metallschichten (20₁...20ₙ), die übereinandergelegt sind, wobei jede Schicht ein Muster beschreibt, das aus einem digitalen Bezugsformstück (*M*) definiert wird, wobei jede Schicht durch die Ablagerung eines Metalls (25), das als Zusatzmetall bezeichnet wird, gebildet wird, wobei das Zusatzmetall einer Energiezufuhr ausgesetzt wird, um es zu schmelzen und nach dem Verfestigen die Schicht darzustellen, wobei das Zusatzmetall die Form eines Pulvers (25) annimmt, das durch Bestrahlung mit einem Energiestrahl (32) geschmolzen und danach verfestigt wird, um eine feste Schicht (20₁...20ₙ) zu bilden,
wobei das Verfahren **dadurch gekennzeichnet ist, dass** das Zusatzmetall (25) eine Aluminiumlegierung ist, die mindestens die folgenden Legierungselemente umfasst:
- Si in einem Massenanteil von 0 bis 4 %, vorzugsweise von 0,5 bis 4 %, bevorzugter von 1 bis 4 %, und noch bevorzugter von 1 bis 3 %;
- Fe in einem Massenanteil von 1 % bis 15 %, vorzugsweise von 2 % bis 10 %;
- V in einem Massenanteil von 0 bis 5 %, vorzugsweise von 0,5 bis 5 %, bevorzugter von 1 bis 5 %, und noch bevorzugter von 1 bis 3 %;
- mindestens ein Element, ausgewählt aus: Ni, La und/oder Co in einem Massenanteil von jeweils 3 bis 8 % und in einem Massenanteil kleiner oder gleich 15 %, vorzugsweise kleiner oder gleich 12 % insgesamt;
- optional mindestens ein Element, ausgewählt aus: Mn, Ti, W, Nb, Ta, Y, Yb, Nd, Er, Cr, Zr, Hf, Ce, Sc und/oder Mischmetall in einem Massenanteil von jeweils kleiner oder gleich 5 % oder kleiner oder gleich 15 % insgesamt;
- optional mindestens ein Element, ausgewählt aus: Sr, Ba, Sb, Bi, Ca, P, B, In und/oder Sn in einem Massenanteil von jeweils kleiner oder gleich 1 % und kleiner oder gleich 2 % insgesamt;
- optional mindestens ein Element, ausgewählt aus: Ag in einem Massenanteil von 0,06 bis 1 %, Li in einem Massenanteil von 0,06 bis 1 %, Cu in einem Massenanteil von 0,06 bis 5 %, Zn in einem Massenanteil von 0,06 bis 1 % und/oder Mg in einem Massenanteil von 0,06 bis 1 %;
- optional Verunreinigungen mit einem Massenanteil von jeweils weniger als 500 ppm und insgesamt weniger als 0,15 %;
- wobei der Rest aus Aluminium besteht.

2. Verfahren nach Anspruch 1, wobei der Massenanteil mindestens eines Elements, ausgewählt aus: Mn, Ti, W, Nb, Ta, Y, Yb, Nd, Er, Cr, Zr, Hf, Ce, Sc und/oder dem Mischmetall, jeweils kleiner oder gleich 3 % und vorzugsweise kleiner oder gleich 12 %, noch bevorzugter kleiner oder gleich 5 % insgesamt beträgt.

3. Verfahren nach einem der vorhergehenden Ansprüche, wobei der Massenanteil mindestens eines Elements, ausgewählt aus: Sr, Ba, Sb, Bi, Ca, P, B, In und/oder Sn, jeweils kleiner oder gleich 0,1 %, vorzugsweise kleiner oder gleich 700 und vorzugsweise kleiner oder gleich 1 % insgesamt beträgt.

4. Verfahren nach einem der vorhergehenden Ansprüche, wobei der Massenanteil von Cu 0,1 bis 2 % beträgt.

5. Verfahren nach einem der vorstehenden Ansprüche, wobei die Aluminiumlegierung ebenfalls mindestens ein Element zum Verfeinern der Körner, beispielsweise AlTiC oder AlTiB2, in einer Menge von kleiner oder gleich 50 kg/Tonne, vorzugsweise kleiner oder gleich 20 kg/Tonne, noch bevorzugter kleiner oder gleich 12 kg/Tonne jeweils, und insgesamt kleiner oder gleich 50 kg/Tonne, vorzugsweise kleiner oder gleich 20 kg/Tonne, umfasst.

6. Verfahren nach einem der vorhergehenden Ansprüche, das infolge der Bildung der Schichten (20₁...20ₙ) Folgendes umfasst:
- eine Auflösung gefolgt von Abschrecken und Anlassen oder
- eine Wärmebehandlung typischerweise bei einer Temperatur von mindestens 100 °C und höchstens 400 °C,
- und/oder ein isostatisches Heißpressen.

## Claims

1. Method for manufacturing a part including a formation of successive solid metal layers (20₁...20ₙ), superimposed on each other, each layer describing a pattern defined from a digital model (M), each layer being formed by the deposition of a metal (25), referred to as solder, the solder being subjected to an input of energy so as to start to melt and to constitute, by solidifying, said layer, wherein the solder is in the form of a powder (25), the exposure of which to an energy beam (32) results in melting followed by solidification so as to form a solid layer (20₁...20ₙ),
the method being **characterised in that** the solder (25) is an aluminium alloy comprising at least the following alloy elements:
- Si, in a fraction by weight of 0 to 4%, preferably 0.5 to 4%, more preferentially 1 to 4%, and even more preferentially 1 to 3%;
- Fe, in a fraction by weight of 1% to 15%, preferably 2 to 10%;
- V, in a fraction by weight of 0 to 5%, preferably 0.5 to 5%, more preferentially 1 to 5%, and even more preferentially 1 to 3%;
- at least one element chosen from: Ni, La and/or Co, in a fraction by weight of 3 to 8% each and in a fraction by weight of less than or equal to 15%, preferably less than or equal to 12% in total;
- optionally at least one element chosen from Mn, Ti, W, Nb, Ta, Y, Yb, Nd, Er, Cr, Zr, Hf, Sc, Ce and/or mischmetal, in a fraction by weight of less than or equal to 5% each, and less than or equal to 15% in total;
- optionally at least one element chosen from: Sr, Ba, Sb, Bi, Ca, P, B, In, and/or Sn, in a fraction by weight of less than or equal to 1% each, and less than or equal to 2% in total;
- optionally, at least one element chosen from: Ag in a fraction by weight of 0.06 to 1%, Li in a fraction by weight of 0.06 to 1%, Cu in a fraction by weight of 0.06 to 5%, Zn in a fraction by weight of 0.06 to 1% and/or Mg in a fraction by weight of 0.06 to 1%;
- impurities in a fraction by weight of less than 500 ppm each and less than 0.15% in total;
- the remainder being aluminium.

2. Method according to claim 1, wherein the fraction by weight of at least one element chosen from: Mn, Ti, W, Nb, Ta, Y, Yb, Nd, Er, Cr, Zr, Hf, Ce, Sc and/or mischmetal, is less than or equal to 3% each, preferably less than or equal to 12%, even more preferentially less than or equal to 5% in total.

3. Method according to any one of the preceding claims, wherein the fraction by weight of at least one element chosen from: Sr, Ba, Sb, Bi, Ca, P, B, In and/or Sn, is less than or equal to 0.1%, preferentially less than or equal to 700 ppm each, and preferably less than or equal to 1% in total.

4. Method according to any one of the preceding claims, wherein the fraction by weight of Cu is 0.1 to 2%.

5. Method according to any one of the preceding claims, wherein the aluminium alloy also comprises at least one compound for refining the grains, for example AlTiC or AlTiB2, in a quantity of less than or equal to 50 kg/tonne, preferably less than or equal to 20 kg/tonne, even more preferentially less than or equal to 12 kg/tonne each, and less than or equal to 50 kg/tonne, preferably less than or equal to 20 kg/tonne in total.

6. Method according to any one of the preceding claims, including, following the formation of the layers (20₁...20ₙ):
- solution heat treatment followed by quenching and aging, or
- heat treatment typically at a temperature of at least 100°C and no more than 400°C,
- and/or hot isostatic compression.
